# EUROPEAN PATENT APPLICATION

(11) **EP 4 718 542 A1**
(43) Date of publication of application: **01.04.2026**
(21) Application number: 24849513.7
(22) Date of filing: 26.07.2024
(51) Int. Cl.: H01M 4/66, H01M 4/62, H01M 10/42, H01M 10/052

(54) **ELECTRODE CURRENT COLLECTOR, ELECTRODE ASSEMBLY COMPRISING SAME, AND LITHIUM SECONDARY BATTERY**

(30) Priority: 28.07.2023 KR 20230099240
(71) Applicant: LG Energy Solution, Ltd., Seoul 07335 (KR)
(72) Inventor: KANG, Gyung Soo, Daejeon 34122 (KR); MOON, Jae Won, Daejeon 34122 (KR); YU, Hyung Kyun, Daejeon 34122 (KR); PAENG, Ki Hoon, Daejeon 34122 (KR)
(74) Representative: Hoffmann Eitle
(86) International application number: PCT/KR2024/010934
(87) International publication number: WO 2025/028944

(57) **Abstract**

An electrode current collector according to the present invention includes a first metal layer, a second metal layer disposed facing the first metal layer, and a polymer resin layer disposed between the first metal layer and the second metal layer, wherein the polymer resin layer includes a first polymer resin layer in contact with the first metal layer and a second polymer resin layer in contact with the second metal layer, and when the first polymer resin layer includes a thermoplastic polymer material, the second polymer resin layer includes a thermosetting polymer material.

## Description

### TECHNICAL FIELD

### Cross-reference to Related Applications

This application claims the benefit of priority from Korean Patent Application No. 10-2023-0099240, filed on 7/28/2023, in the Korean Intellectual Property Office, the disclosure of which is incorporated herein in its entirety by reference.

### Technical Field

The present invention relates to an electrode current collector, and an electrode assembly and a lithium secondary battery which include the same.

### BACKGROUND ART

In recent years, there has been a dramatic increase in demand for batteries as energy sources with the technical development and increase in demand for Energy Storage System (ESS), and research on batteries capable of meeting various requirements has been conducted accordingly. In particular, research on lithium secondary batteries having a high energy density and also exhibiting excellent lifespan and cycle characteristics as a power source for such devices has been actively conducted.

However, lithium secondary batteries may undergo a rapid temperature rise in an electrode due to thermal and physical factors. The thermal factors include overcharging or overloading caused by misuse or charger malfunction, and the physical factors include internal short circuits caused when an external impact damages a separator, allowing negative and positive electrode materials to come into contact, which may lead to a rapid increase in electrode temperature. Such a rapid increase in electrode temperature may render batteries highly unstable due to reactions between an electrolyte and lithium or generation of hydrogen and oxygen within battery cells, cause an electrolyte solvent to decompose, generating gas, and cause the decomposed gas of the solvent to ignite, resulting in battery explosion.

Typical lithium secondary batteries employ only a single metal layer as an electrode current collector, specifically an aluminum single metal layer as a positive electrode current collector and a copper single metal layer as a negative electrode current collector. However, such a single metal layer has very high electrical and thermal conductivities, leading to a very short time to reach high temperatures instantaneously during abnormal battery behavior, which raises concerns about thermal propagation resulting from thermal runaway.

Hence, an electrode current collector including a polymer resin layer sandwiched between two metal layers, when used instead of the typical electrode current collector, may be made lighter than an electrode current collector made of metal, leading to a substantial increase in energy density per unit weight and enhanced safety by causing a short circuit between electrodes in the event of a fire.

Yet, as for the electrode current collector including a polymer resin layer sandwiched between two metal layers, which may improve safety against mechanical damage from foreign substances, such as nail penetration, safety against thermal propagation in the event of an actual fire needs further improvement.

### DISCLOSURE OF THE INVENTION

### TECHNICAL PROBLEM

The present invention is designed to overcome the limitations described above, and thus an aspect of the present invention provides an electrode current collector that offers superior fire safety, heat resistance, and thermal insulation, and exhibiting increased energy density through weight reduction, and an electrode assembly and a lithium secondary battery which include the same.

### TECHNICAL SOLUTION

According to an aspect of the present invention, provided is an electrode current collector including a first metal layer, a second metal layer disposed facing the first metal layer, and a polymer resin layer disposed between the first metal layer and the second metal layer, wherein the polymer resin layer includes a first polymer resin layer in contact with the first metal layer and a second polymer resin layer in contact with the second metal layer, and when the first polymer resin layer includes a thermoplastic polymer material, the second polymer resin layer includes a thermosetting polymer material.

The thermoplastic polymer material may have a melting point of 120 °C or greater.

When the first polymer resin layer includes a thermoplastic polymer material, the first metal layer and the first polymer resin layer may be distributed in an island form at 120 °C or greater.

The first polymer resin layer may include at least one selected from the group consisting of a urethane-based resin, an acryl-based resin, a silicone-based resin, and an ethylene vinyl acetate-based resin, and the second polymer resin layer may include at least one selected from the group consisting of a polyimide-based resin, a polyester-based resin, an epoxy-based resin, an amino-based resin, a phenol-based resin, a melamine-based resin, and a rubber-based resin.

The first metal layer and the second metal layer may each independently include at least one selected from the group consisting of copper, aluminum, stainless steel, and nickel.

The first metal layer or the second metal layer and the first polymer resin layer or the second polymer resin layer may have a thickness ratio ranging from 1:1 to 1:24. The first polymer resin layer and the second polymer resin layer may each independently have a thickness of 2 µm to 12 µm. The first metal layer and the second metal layer may each independently have a thickness of 0.2 µm to 5.0 µm.

The electrode current collector may further include an adhesive layer between the first polymer resin layer and the second polymer resin layer.

The polymer resin layer may further include a third polymer resin layer disposed between the first polymer resin layer and the second polymer resin layer, and when the first polymer resin layer and the second polymer resin layer include a thermoplastic polymer material, the third polymer resin layer may include a thermosetting polymer material.

According to another aspect of the present invention, provided is an electrode assembly including a first positive electrode including a first metal layer, a second metal layer disposed facing the first metal layer, and a first polymer resin layer including a thermoplastic polymer material disposed between the first metal layer and the second metal layer, a second positive electrode including a third metal layer, a fourth metal layer disposed facing the third metal layer, and a second polymer resin layer including a thermosetting polymer material disposed between the third metal layer and the fourth metal layer, a negative electrode disposed between the first positive electrode and the second positive electrode, and a separator disposed between the first positive electrode and the negative electrode, and between the negative electrode and the second positive electrode.

According to another aspect of the present invention, provided is a lithium secondary battery including the electrode assembly described above.

### ADVANTAGEOUS EFFECTS

An electrode assembly according to the present invention includes two or more polymer resin layers with different properties between two metal layers, where a polymer resin layer containing a thermoplastic polymer material at high temperatures may be deformed into an island shape and gradually disappear, thereby inducing electrical short circuits, and a polymer resin layer containing a thermosetting polymer material may remain unchanged in form and physically maintain electrical insulation. Accordingly, this may improve safety against both mechanical damage from foreign substances, such as nail penetration, and thermal propagation in the event of an actual fire.

In addition, the electrode assembly according to the present invention may be made lighter than an electrode assembly formed of only a single metal layer, resulting in an increased energy density per unit weight.

### BRIEF DESCRIPTION OF THE DRAWINGS

FIG. 1 is a cross-sectional view showing a typical electrode current collector;
FIG. 2 is a cross-sectional view showing an electrode current collector according to an embodiment of the present invention;
FIG. 3 is a cross-sectional view showing the form of the electrode current collector from FIG. 2 under high temperature conditions;
FIG. 4 is a cross-sectional view showing an electrode current collector according to an embodiment of the present invention;
FIG. 5 is a cross-sectional view showing an electrode assembly according to an embodiment of the present invention;
FIG. 6 shows images of a surface of each electrode current collector according to Comparative Examples 1, 2, and 4 after an hour of storage at 406 °C; and
FIG. 7 shows images of a surface of each electrode current collector according to Comparative Examples 1, 2, and 4 after an hour of storage at 662 °C.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" as used herein does not exclude the presence or addition of one or more other components besides a mentioned component.

As used herein, when an element "includes" a component, it may indicate that the element does not exclude another component unless explicitly described to the contrary, but may further include another component.

As used herein, the description "A and/or B" refers to A or B, or A and B.

As used herein, "%" indicates wt% unless indicated otherwise.

### Electrode current collector

Hereinafter, an electrode current collector according to the present invention will be described.

Typical lithium secondary batteries employ only a single metal layer as an electrode current collector, specifically an aluminum single metal layer as a positive electrode current collector and a copper single metal layer as a negative electrode current collector. However, such a single metal layer has very high electrical and thermal conductivities, leading to a very short time to reach high temperatures instantaneously during abnormal battery behavior, which raises concerns about thermal propagation resulting from thermal runaway.

Hence, an electrode current collector including a polymer resin layer sandwiched between two metal layers, when used instead of the typical electrode current collector may be made lighter than an electrode current collector made of metal, leading to a substantial increase in energy density per unit weight and enhanced safety by causing a short circuit between electrodes in the event of a fire.

Yet, as for the electrode current collector including a polymer resin layer sandwiched between two metal layers, which may improve safety against mechanical damage from foreign substances, such as nail penetration, safety against thermal propagation in the event of an actual fire needs further improvement.

Accordingly, the inventors of the present invention have devised an electrode current collector that offers enhanced safety against both mechanical damage from foreign substances, such as nail penetration, and thermal propagation in the event of an actual fire, more specifically an electrode current collector including a polymer resin layer sandwiched between two metal layers, where the polymer resin layer includes two or more polymer resin layers exhibiting different properties, such that a polymer resin layer containing a thermoplastic polymer material may be deformed into an island shape and gradually disappear to induce electrical short circuits at high temperatures, and a polymer resin layer containing a thermosetting polymer material may remain unchanged in form and physically maintain electrical insulation.

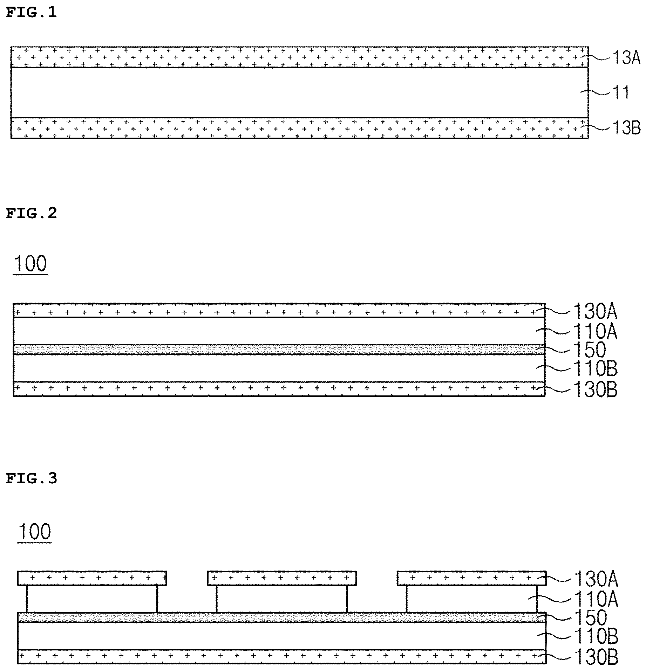

FIG. 2 is a cross-sectional view showing an electrode current collector 100 according to an embodiment of the present invention.

Referring to FIG. 2, the electrode current collector 100 according to an embodiment of the present invention may include a first metal layer 130A, a second metal layer 130B disposed facing the first metal layer, and a polymer resin layer disposed between the first metal layer and the second metal layer, where the polymer resin layer includes a first polymer resin layer 110A and a second polymer resin layer 110B, and when the first polymer resin layer 110A includes a thermoplastic polymer material, the second polymer resin layer 110B may include a thermosetting polymer material.

### (1) Polymer resin layer

The polymer resin layer, as a matrix resin may serve to prevent abnormal heat transfer between an electrode current collector and an electrode composite layer, and to enable weight reduction of the electrode current collector and alleviate external impact.

The polymer resin layer may include a first polymer resin layer 110A and a second polymer resin layer 110B, and when the first polymer resin layer 110A includes a thermoplastic polymer material, the second polymer resin layer 110B may include a thermosetting polymer material. Conversely, when the first polymer resin layer 110A includes a thermosetting polymer material, the second polymer resin layer 110B may include a thermoplastic polymer material. For example, the second polymer resin layer 110B may be laminated on the first polymer resin layer 110A and then rolled under a heated state or subjected to roll pressure, through a laminating process.

The thermoplastic polymer material indicates a polymer material exhibiting plasticity when heated to a high temperature, leading to plastic deformation, and having a melting point lower than decomposition temperature. The thermoplastic polymer material may have a melting point of 120 °C or greater, preferably 160 °C or greater, and more preferably 160 °C to 260 °C. For example, the thermoplastic polymer material may include at least one selected from the group consisting of a urethane-based resin, an acryl-based resin, a silicone-based resin, and an ethylene vinyl acetate-based resin. Specifically, the thermoplastic polymer material may include at least one selected from the group consisting of polyethylene (PE), polyethylene terephthalate (PET), polybutylene terephthalate (PBT), polyethylene naphthalate (PEN), polystyrene (PS), polyamide (PA), polyacrylonitrile (PAN), polypropylene (PP), and polyvinyl chloride (PVC). Preferably, the thermoplastic polymer material may include at least one of polyethylene (PE) or polyethylene naphthalate (PEN) .

The thermosetting polymer material indicates a polymer material exhibiting hardening in which a crosslinked structure is formed inside a polymer chain when heated at a high temperature, resulting in a hardened state, and having a melting point greater than decomposition temperature. The thermosetting polymer material may include, for example, at least one selected from the group consisting of a polyimide-based resin, a polyester-based resin, an epoxy-based resin, an amino-based resin, a phenol-based resin, a melamine-based resin, and a rubber-based resin. Preferably, the thermosetting polymer material may include at least one selected from the group consisting of a polyimide-based resin, an epoxy-based resin, and a melamine-based resin.

The first polymer resin layer 110A and the second polymer resin layer 110B may each independently have a thickness of 2 µm to 12 µm, preferably 3 µm to 10 µm, and more preferably 4 µm to 8 µm. When the first polymer resin layer 110A and the second polymer resin layer 110B have a thickness of less than 2 µm, the resin layers are too thin to inhibit abnormal heat transfer, offer reduced weight of the electrode current collector, and alleviate external impact. Conversely, when the thickness is greater than 12 µm, cells may have a significant increase in thickness, resulting in increased resistance and a negative impact on energy density. When the thickness of the first polymer resin layer 110A and the second polymer resin layer 110B satisfies the numerical range described above, cells may have increased energy density and maintain electrical short-circuiting or physical electrical insulation with other electrodes.

When needed, the polymer resin layer may include a photoinitiator such as a benzoin compound, an acetophenone compound, an acylphosphine oxide compound, a titanocene compound, a thioxanthone compound, or a peroxide compound, or a photoinitiator such as amine or quinone, and may further include amine-based, imidazole-based, phosphorus-based, boron-based, and phosphorus-boron-based curing agents. In addition, the polymer resin layer may include a thermal initiator such as peroxide including azobisnitrile, benzoyl peroxide, or acetyl peroxide.

FIG. 3 is a cross-sectional view showing the form of the electrode current collector from FIG. 2 under high temperature conditions.

Referring to FIG. 3, when the first polymer resin layer 110A includes a thermoplastic polymer material, at 120 °C or greater, the first metal layer 130A and the first polymer resin layer 110A may be deformed into an island shape and gradually disappear, thereby inducing electrical short circuits. Conversely, when the second polymer resin layer 110B includes a thermosetting polymer material, the second metal layer 19 and the second polymer resin layer 13 may remain unchanged in form and physically maintain electrical insulation. Therefore, safety against thermal propagation in the event of an actual fire may be enhanced.

An adhesive layer 150 may be further included between the first polymer resin layer 110A and the second polymer resin layer 110B. The adhesive layer 150 is not an essential component, but is a component for increasing bonding strength between the first polymer resin layer 110A and the second polymer resin layer 110B. The adhesive layer 150 may include any adhesive, and for example, may include at least one selected from the group consisting of styrene butadiene rubber (SBR), carboxymethyl cellulose (CMC), polyacrylic acid (PAA), polyvinyl alcohol (PVA), polytetrafluoroethylene (PTFE), polyvinylidene fluoride (PVdF), and vinylidene fluoride-hexafluoropropylene copolymer (PVdF-HFP).

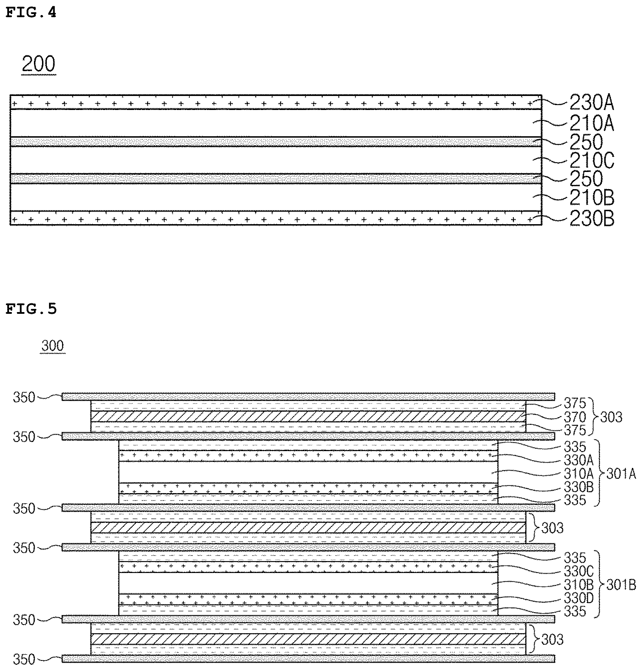

FIG. 4 is a cross-sectional view showing an electrode current collector 200 according to an embodiment of the present invention.

Referring to FIG. 4, the electrode current collector 200 according to an embodiment of the present invention includes a polymer resin layer between a first metal layer 230A and a second metal layer 230B, where the polymer resin layer includes a first polymer resin layer 210A in contact with the first metal layer, a second polymer resin layer 210B in contact with the second metal layer, and a third polymer resin layer 210C disposed between the first polymer resin layer and the second polymer resin layer, and when the first polymer resin layer 210A and the second polymer resin layer 210B include a thermoplastic polymer material, the third polymer resin layer 210C may include a thermosetting polymer material.

When the first polymer resin layer 210A and the second polymer resin layer 210B include a thermoplastic polymer material, at 120 °C or greater, the first metal layer 230A, the second metal layer 230B, the first polymer resin layer 210A, and the second polymer resin layer 210B may be deformed into an island shape and gradually disappear, thereby inducing electrical short circuits. Conversely, when the third polymer resin layer 210C includes a thermosetting polymer material, the third polymer resin layer 210C may remain unchanged in form and physically maintain electrical insulation. Accordingly, this may improve safety against both mechanical damage from foreign substances, such as nail penetration, and thermal propagation in the event of an actual fire.

An adhesive layer 250 may be further included between the first polymer resin layer 210A and the third polymer resin layer 210C and between the second polymer resin layer 210B and the third polymer resin layer 210C. The adhesive layer 250 may be the same in configuration as the adhesive layer 150 in FIG. 3.

### (2) Metal layer

Referring to FIGS. 2 to 4, the first metal layers 130A and 230A and/or the second metal layers 130B and 230B may include at least one selected from the group consisting of copper, aluminum, stainless steel, and nickel. Although not particularly limited, when forming a positive electrode current collector, it is preferable to include aluminum, and when forming a negative electrode current collector, it is preferable to include copper. In addition, the first metal layers 130A and 230A and/or the second metal layers 130B and 230B may form fine irregularities on surfaces to increase bonding strength with an electrode composite layer, and may be used in various forms such as a film, a sheet, a foil, a net, a porous body, a foam body, or a non-woven fabric body.

The first metal layers 130A and 230A and/or the second metal layers 130B and 230B may have a thickness of 0.2 µm to 5.0 µm, preferably 0.5 µm to 2.0 µm, and more preferably 0.5 µm to 1.0 µm. When the first metal layers 130A and 230A and/or the second metal layers 130B and 230B have a thickness of less than 0.2 µm, the metal layers are too thin to serve as a support, thereby hardly maintaining a form of an electrode and controlling physical properties of an electrode. Conversely, when the thickness is greater than 5.0 µm, an electrode has increased resistance and cells have excessively increased thickness and weight, thereby reducing energy density.

A thickness ratio of the first metal layers 130A and 230A and the first polymer resin layers 110A and 210A may be 1:1 to 1:24, and a thickness ratio of the second metal layers 130B and 230B and the second polymer resin layers 110B and 210B may be 1:1 to 1:24. The thickness ratio of the first metal layers 130A and 230A or the second metal layers 130B and 230B and the first polymer resin layers 110A and 210A or the second polymer resin layers 110B and 210B may be preferably 1:2 to 1:16, more preferably 1:4 to 1:12. When the thickness ratio of the first metal layers 130A and 230A or the second metal layers 130B and 230B and the first polymer resin layers 110A and 210A or the second polymer resin layers 110B and 210B satisfies the numerical range described above, cells may have increased energy density and maintain electrical short-circuiting or physical electrical insulation with other electrodes.

### Electrode assembly and Lithium secondary battery

FIG. 5 is a cross-sectional view showing an electrode assembly 300 according to an embodiment of the present invention.

Referring to FIG. 5, the electrode assembly 300 according to an embodiment of the present invention may include a first positive electrode 301A, a second positive electrode 301B, a negative electrode 303 positioned between the first positive electrode and the second positive electrode, and a separator 350 positioned between the first positive electrode and the negative electrode and between the negative electrode and the second positive electrode.

Specifically, the first positive electrode 301A may include a first metal layer 330A, a second metal layer 330B disposed facing the first metal layer, and a first polymer resin layer 310A including a thermoplastic polymer material disposed between the first metal layer and the second metal layer, and the second positive electrode 301B may include a third metal layer 330C, a fourth metal layer 330D disposed facing the third metal layer, and a second polymer resin layer 310B including a thermosetting polymer material disposed between the third metal layer and the fourth metal layer.

Specifically, at 120 °C or greater, the first metal layer 330A, the second metal layer 330B, and the first polymer resin layer 310A may be deformed into an island shape and gradually disappear, thereby inducing electrical short circuits. Conversely, the third metal layer 330C, the fourth metal layer 330D, and the second polymer resin layer 310B may remain unchanged in form and physically maintain electrical insulation. Accordingly, this may improve safety against both mechanical damage from foreign substances, such as nail penetration, and thermal propagation in the event of an actual fire.

A lithium secondary battery according to the present invention includes the electrode assembly of the present invention described above. Specifically, in the lithium secondary battery, a positive electrode, a separator, and a negative electrode are sequentially laminated, the separator is disposed between the positive electrode and the negative electrode, the positive electrode includes a positive electrode current collector and a positive electrode active material layer laminated on the positive electrode current collector, the negative electrode includes a negative electrode current collector and a negative electrode active material layer laminated on the negative electrode current collector, and at least one of the positive electrode current collector or the negative electrode current collector is the electrode current collector of the present invention described above.

Since the electrode current collector has been described above, the detailed description thereof will be skipped, and hereinafter, the other components will only be described.

### (Positive electrode)

The positive electrode current collector may include a highly conductive metal and is not particularly limited as long as the positive electrode active material layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 µm to 500 µm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer may optionally include a conductive material and a binder in addition to the positive electrode active material, as necessary.

In this case, the positive electrode active material may be included in an amount of 80 wt% to 99 wt%, more specifically 90 wt% to 98 wt%, with respect to the total weight of the positive electrode active material layer.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fibers; metal powder or metal fiber such as copper, nickel, aluminum, and silver; conductive tubes such as carbon nanotubes; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, more preferably 0.1 wt% to 5 wt%, with respect to a total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 1 wt% to 30 wt%, preferably 1 wt% to 20 wt%, more preferably 1 wt% to 10 wt%, with respect to the total weight of the positive electrode active material layer.

The positive electrode may be prepared according to a typical method of preparing a positive electrode, except that the positive electrode active material described above is used. Specifically, a positive electrode slurry composition prepared by dissolving or dispersing the positive electrode active material and, if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

### (Separator)

The separator separates the negative electrode and the positive electrode and provides a movement path of lithium ions, and any separator may be used as the separator without particular limitation as long as it is typically used in secondary batteries, and particularly, a separator having excellent moisture-retention of an electrolyte as well as low resistance to ion movement in the electrolyte is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it is a compound capable of providing lithium ions used in lithium secondary batteries. To be specific, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄ LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN (CF₃SO₂)₂, LiCl, LiI, or LiB(C₂O₄)₂ may be used. The lithium salt may be used in a concentration range of 0.1 M to 4.0 M, preferably 0.5 M to 3.0 M, more preferably 1.0 M to 2.0 M. When the concentration of the lithium salt is included within the above range, the electrolyte has suitable conductivity and viscosity and may thus exhibit excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexamethyl phosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifespan characteristics of batteries, suppressing reduction in battery capacity, enhancing the discharge capacity of batteries, and the like. In this case, the additive may be included in an amount of 0.1 wt% to 10.0 wt% with respect to a total weight of the electrolyte.

### (Negative electrode)

The negative electrode includes a negative electrode current collector, and a negative electrode active material layer disposed on the negative electrode current collector.

The negative electrode current collector is not particularly limited as long as it has a high conductivity without causing chemical changes in batteries. For example, copper, stainless steel, aluminum, nickel, titanium, heat treated carbon, copper or stainless steel that is surface-treated with one of carbon, nickel, titanium, silver, and the like, an aluminum-cadmium alloy, and the like may be used. In addition, the negative electrode current collector may typically have a thickness of 3 µm to 500 µm, and as in the case of the positive electrode current collector, fine irregularities may be formed on a surface of the negative electrode current collector to improve the adhesion of the negative electrode active material. The negative electrode current collector, for example, may be used in various shapes such as that of a film, a sheet, a foil, a net, a porous body, a foam body, a non-woven fabric body, and the like.

The negative electrode active material layer optionally includes a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiOβ (0<β<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, a metallic lithium thin film may be used as the negative electrode active material. In addition, as a carbon material, low-crystalline carbon, high-crystalline carbon, and the like may all be used. Typical examples of the low-crystalline carbon may be soft carbon and hard carbon, and typical examples of the high-crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat treated carbon such as petroleum or coal tar pitch derived cokes.

The negative electrode active material may be included in an amount of 80 wt% to 99 wt%, 82 wt% to 99 wt%, or 84 wt% to 99 wt%, with respect to the total weight of the negative electrode active material layer.

The binder is a component that assists in the binding between the conductive agent, the active material, and the current collector, and is commonly added in an amount of 0.1 wt% to 10 wt% with respect to the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive material is a component for further improving conductivity of the negative electrode active material, and may be included in an amount of 1 wt% to 30 wt%, 1 wt% to 20 wt%, or 1 wt% to 10 wt%, with respect to the total weight of the negative electrode active material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; carbon fluoride; metal powder such as aluminum powder, and nickel powder; conductive whiskers such as zinc oxide whiskers and potassium titanate whiskers; conductive metal oxide such as titanium oxide; or polyphenylene derivatives, or the like may be used.

The negative electrode active material layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

In addition, the lithium secondary battery may optionally further include a battery case for accommodating an electrode assembly of the positive electrode, the separator, and the negative electrode, and a sealing member for sealing the battery case.

In addition, the lithium secondary battery according to the present invention as described above stably exhibits excellent discharging capacity, output properties, and capacity retention, and thus, is useful for portable devices such as a mobile phone, a notebook computer, and a digital camera, and in the field of electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Examples and Comparative Examples

### Example 1 - Manufacturing of electrode current collector

Polyethylene terephthalate (PET) having a thickness of 6 µm and polyimide (PI) having a thickness of 6 µm were sequentially laminated and bonded through a lamination process, and then a 1 µm-thick aluminum metal was deposited onto one surface of each of the polyethylene terephthalate (PET) and polyimide (PI) using physical vapor deposition (PVD) to form a first metal layer and a second metal layer, thereby preparing an electrode current collector.

### Example 2 - Preparation of electrode current collector

Polyethylene terephthalate (PET) having a thickness of 6 µm, polyimide (PI) having a thickness of 6 µm, and polyethylene terephthalate (PET) having a thickness of 6 µm were sequentially laminated and bonded through a lamination process, and then a 1 µm-thick aluminum metal was deposited onto one surface of the polyethylene terephthalate (PET) using physical vapor deposition (PVD) to form a first metal layer and a second metal layer, thereby preparing an electrode current collector.

### Example 3 - Manufacturing of electrode current collector

A 1 µm-thick aluminum metal was deposited onto both surfaces of polyethylene terephthalate (PET) having a thickness of 4 µm using physical vapor deposition (PVD) to form a first metal layer and a second metal layer, thereby preparing a first positive electrode current collector.

In addition, a 1 µm-thick aluminum metal was deposited onto both surfaces of polyimide (PI) having a thickness of 4 µm using physical vapor deposition (PVD) to form a third metal layer and a fourth metal layer, thereby preparing a second positive electrode current collector.

### Comparative Example 1 - Preparation of electrode current collector

An electrode current collector formed of a 12 µm-thick aluminum metal as a typical metal current collector was prepared.

### Comparative Example 2 - Preparation of electrode current collector

A 1 µm-thick aluminum metal was deposited onto both surfaces of polyethylene terephthalate (PET) having a thickness of 4 µm using physical vapor deposition (PVD) to form a first metal layer and a second metal layer, thereby preparing an electrode current collector.

### Comparative Example 3 - Preparation of electrode current collector

Polyethylene terephthalate (PET) having a thickness of 6 µm and naphthalic acid polyethylene (PEN) having a thickness of 6 µm were sequentially laminated and bonded through a lamination process using a 3 µm-thick adhesive layer, and then a 1 µm-thick aluminum metal was deposited onto one surface of each of the polyethylene terephthalate (PET) and naphthalic acid polyethylene (PEN) using physical vapor deposition (PVD) to form a first metal layer and a second metal layer, thereby preparing an electrode current collector.

### Comparative Example 4 - Preparation of electrode current collector

polyimide (PI) having a thickness of 6 µm and an epoxy resin having a thickness of 6 µm were sequentially laminated and bonded through a lamination process using a 3 µm-thick adhesive layer, and then a 1 µm-thick aluminum metal was deposited onto one surface of each of the polyimide (PI) and epoxy resin using physical vapor deposition (PVD) to form a first metal layer and a second metal layer, thereby preparing an electrode current collector.

### Experimental Example 1

To determine the state of each of a metal layer, a polymer layer including a thermoplastic polymer material, and a polymer resin layer including a thermosetting material at high temperatures, the electrode current collectors prepared in Comparative Examples 1, 2, and 4 were each stored in a furnace at 406 °C and 662 °C for 1 hour and heat-treated, and then images of surface states thereof were obtained and examined. The heat treatment at 662 °C was performed at 662 °C considering that the melting point of aluminum is generally 660 °C.

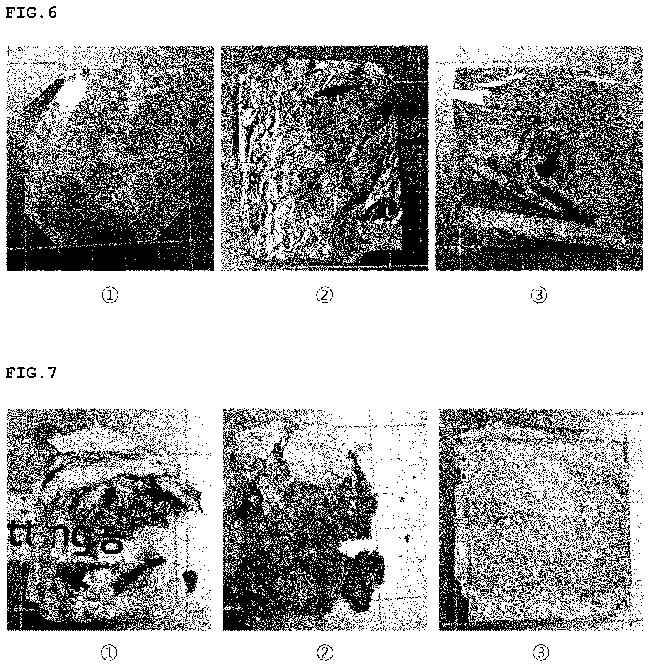

An image after the heat treatment at 406 °C is shown in FIG. 6, and an image after the heat treatment at 662 °C is shown in FIG. 7.

As shown in FIG. 6, even after the heat treatment at 406 °C, an electrode current collector ① made of the metal of Comparative Example 1 showed no particular change on the surface thereof, and an electrode current collector ③ made of the thermosetting resin of Comparative Example 4 also showed no particular change on the surface thereof except for slight curling. Conversely, it was determined that an electrode current collector ② made of the thermoplastic resin of Comparative Example 2 exhibited shrinkage and developed numerous wrinkles on the surface thereof.

As shown in FIG. 7, it was determined that after heat treatment at 662 °C, the electrode current collector ① made of the metal of Comparative Example 1 was deformed due to heat and a portion thereof was lost, and the electrode current collector ② made of the thermoplastic resin of Comparative Example 2 exhibited further shrinkage and turned into ash, losing the form thereof. Conversely, it was determined that the electrode current collector ③ made of the thermosetting resin of Comparative Example 4 developed slight wrinkles on the surface thereof but maintained the form thereof, and only crumbled upon contact.

Accordingly, it was determined that at abnormally high temperatures, the thermoplastic resin layer exhibited shrinkage first as the temperature increased, deformed into an island shape, and gradually disappeared, thereby inducing electrical short circuits, but even at the temperature at which the thermoplastic resin layer was deformed, the thermosetting resin layer and the metal layer were able to maintain the form thereof. In addition, it was determined that the thermosetting resin layer was able to maintain the form thereof and maintained physical electrical insulation even at higher temperatures where the metal layer was deformed and lost.

### Experimental Example 2

Using the electrode current collectors prepared in Examples 1 to 3 and Comparative Examples 1 to 4, experiments were conducted on manufactured lithium secondary battery cells to evaluate 1) prevention of fire hazards against thermal runaway, 2) time delay effect on thermal propagation, and 3) safety against mechanical damage from foreign substances, such as nail penetration. The experimental results are shown in Table 1 below. In this case, in Table 1, the mark "⊚" indicates very good, the mark "o" indicates good, the mark "△" indicates average, and the mark "X" mark indicates poor.

### <Manufacturing of lithium secondary battery>

A positive electrode active material (NCM65 1520), a conductive material (Li-435), and a PVDF binder (KF9700, AD-c01) were mixed in a weight ratio of 96.5: 1.5: 2.0 in N-methylpyrrolidone to prepare a positive electrode slurry.

The positive electrode slurry was applied onto one surface of each of the electrode current collectors prepared in Examples 1 and 2 and Comparative Examples 1 to 4, dried at 140 °C, and rolled to prepare a positive electrode. The positive electrode slurry was applied onto one surface of each of the first positive electrode current collector and the second positive electrode current collector prepared in Example 3, dried at 140 °C, and rolled to prepare a positive electrode.

Graphite was used as a negative electrode.

A separator was sandwiched between the positive electrode and the negative electrode prepared through the method described above to manufacture an electrode assembly, and the electrode assembly was placed inside a battery case, and then an electrolyte was injected into the case to manufacture a battery cell. 0.7 M LiPF₆ was dissolved in a mixed organic solvent in which ethylene carbonate (EC), propylene carbonate (PC), and ethyl methyl carbonate (EMC) were mixed in a volume ratio of 2:1:7 to prepare an electrolyte.

In this case, the first positive electrode including the first positive electrode current collector and the second positive electrode including the second positive electrode current collector prepared in Example 3 were placed with one negative electrode therebetween.

Specifically, experimental methods to evaluate 1) prevention of fire hazards against thermal runaway, 2) time delay effect on thermal propagation, and 3) mechanical safety upon nail penetration are as follows.

Five of the manufactured battery cells were made into one module, and a heating pad was attached to one of the battery cells to apply heat at a rate of 0.5 °C/sec. The presence or absence of ignition in the battery cell to which the heating pad was attached was observed. In this case, it was determined that the longer the time it took for ignition (fire or smoke) to first occur, the better.

Five of the manufactured battery cells are made into one module, and a heating pad is attached to one of the battery cells to apply heat at a rate of 0.5 °C/sec. In this case, by measuring the heat transferred to adjacent cells using thermocouples, it was determined that a longer delay in heat propagation was desirable.

A nail having a diameter of 3 mm was used to penetrate the center of the manufactured battery cell at a rate of 0.1 mm/s, and then the presence or absence of ignition was observed. In this case, it is determined that the longer the time it took for ignition (fire or smoke) to first occurs, the better.

**[Table 1]**

| | 1) Prevention of fire hazards against thermal runaway | 2) Time delay effect on thermal propagation | 3) Safety against nail penetration |
|---|---|---|---|
| Example 1 | ○ | ○ | ⊚ |
| Example 2 | ○ | ○ | ⊚ |
| Example 3 | Δ | ○ | ○ |
| Comparative Example 1 | X | X | X |
| Comparative Example 2 | Δ | X | ○ |
| Comparative Example 3 | Δ | X | ⊚ |
| Comparative Example 4 | ○ | Δ | ⊚ |

Table 1 shows that the cells including the electrode current collectors prepared in Examples 1 and 2 and the cells including the first and second positive electrode assemblies manufactured in Example 3 are superior to the cells including the electrode assemblies manufactured in Comparative Examples 1 to 4 in 1) prevention of fire hazards against thermal runaway, 2) time delay effect on thermal propagation, and 3) mechanical safety upon nail penetration. It is determined that these results were achieved because the first polymer resin layer including a thermoplastic polymer material exhibited behavior of inducing electrical short circuits while the second polymer resin layer including a thermosetting polymer material exhibited behavior of maintaining physical insulation, and the metal layer exhibited behavior of maintaining electrical short circuits and physical electrical insulation as a function of temperature.

### Description of Symbols

11: Polymer resin layer
100, 200: Electrode current collector
300: Electrode assembly
110A, 210A, 310A: First polymer resin layer
110B, 210B, 310B: Second polymer resin layer
310C: Third polymer resin layer
13A, 130A, 230A, 330A: First metal layer
13B, 130B, 230B, 330B: Second metal layer
330C: Third metal layer
330D: Fourth metal layer
150, 250: Adhesive layer
301: Positive electrode
301A: First positive electrode
301B: Second positive electrode
303: Negative electrode
335: Positive electrode active material layer
350: Separator
370: Negative electrode current collector
375: Negative electrode active material layer

## Claims

1. An electrode current collector comprising:
a first metal layer;
a second metal layer disposed facing the first metal layer; and
a polymer resin layer disposed between the first metal layer and the second metal layer,
wherein the polymer resin layer comprises a first polymer resin layer in contact with the first metal layer, and a second polymer resin layer in contact with the second metal layer, and
when the first polymer resin layer comprises a thermoplastic polymer material, the second polymer resin layer comprises a thermosetting polymer material.

2. The electrode current collector of claim 1, wherein the thermoplastic polymer material has a melting point of 120 °C or greater.

3. The electrode current collector of claim 1, wherein when the first polymer resin layer comprises a thermoplastic polymer material, the first metal layer and the first polymer resin layer are distributed in an island form at 120 °C or greater.

4. The electrode current collector of claim 1, wherein the first polymer resin layer comprises at least one selected from the group consisting of a urethane-based resin, an acryl-based resin, a silicone-based resin, and an ethylene vinyl acetate-based resin.

5. The electrode current collector of claim 1, wherein the second polymer resin layer comprises at least one selected from the group consisting of a polyimide-based resin, a polyester-based resin, an epoxy-based resin, an amino-based resin, a phenol-based resin, a melamine-based resin, and a rubber-based resin.

6. The electrode current collector of claim 1, wherein the first metal layer and the second metal layer each independently comprise at least one selected from the group consisting of copper, aluminum, stainless steel, and nickel.

7. The electrode current collector of claim 1, wherein the first metal layer or the second metal layer and the first polymer resin layer or the second polymer resin layer have a thickness ratio ranging from 1:1 to 1:24.

8. The electrode current collector of claim 1, wherein the first polymer resin layer and the second polymer resin layer each independently have a thickness of 2 µm to 12 µm.

9. The electrode current collector of claim 1, wherein the first metal layer and the second metal layer each independently have a thickness of 0.2 µm to 5.0 µm.

10. The electrode current collector of claim 1, further comprising an adhesive layer between the first polymer resin layer and the second polymer resin layer.

11. The electrode current collector of claim 1, wherein the polymer resin layer further comprises a third polymer resin layer disposed between the first polymer resin layer and the second polymer resin layer, and
when the first polymer resin layer and the second polymer resin layer comprise a thermoplastic polymer material, the third polymer resin layer comprises a thermosetting polymer material.

12. An electrode assembly comprising:
a first positive electrode comprising a first metal layer, a second metal layer disposed facing the first metal layer, and a first polymer resin layer comprising a thermoplastic polymer material disposed between the first metal layer and the second metal layer;
a second positive electrode comprising a third metal layer, a fourth metal layer disposed facing the third metal layer, and a second polymer resin layer comprising a thermosetting polymer material disposed between the third metal layer and the fourth metal layer;
a negative electrode disposed between the first positive electrode and the second positive electrode; and
a separator disposed between the first positive electrode and the negative electrode, and between the negative electrode and the second positive electrode.

13. A lithium secondary battery comprising the electrode assembly of claim 12.
